(19) Europäisches Patentamt / European Patent Office / Office européen des brevets

(11) **EP 4 134 857 A1**

(12) **EUROPEAN PATENT APPLICATION**

(43) Date of publication:
**15.02.2023 Bulletin 2023/07**

(21) Application number: **22188246.7**

(22) Date of filing: **02.08.2022**

(51) International Patent Classification (IPC):
**G06F 21/64** (2013.01)   **H04L 9/00** (1968.09)

(52) Cooperative Patent Classification (CPC):
**G06F 21/64; H04L 9/50**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.08.2021 DE 102021208796**

(71) Applicant: **Robert Bosch GmbH
70442 Stuttgart (DE)**

(72) Inventor: **Poddey, Alexander
75446 Wiernsheim (DE)**

(54) **MAINTAINING CRYPTO TOKENS WITH IMPROVED BONDING CURVE**

(57)   Some embodiments are directed to a computer-implemented method for maintaining crypto tokens of a first type. A smart contract from a distributed ledger defines a bonding curve being as a sequence of multiple curve segments. A creation or annul function of the smart contract may integrate a bonding curve starting from the current supply size to a new supply size to determine an amount of crypto tokens of a second type. The crypto tokens of the second type may be transferred to or from a pool associated with the smart contract, while crypto tokens of the first type may be transferred to a user or may be destroyed. The current supply size of first type tokens may be updated correspondingly.

*100*

*Fig. 1c*

**Description**

**TECHNICAL FIELD**

The presently disclosed subject matter relates to a computer-implemented method for maintaining crypto tokens of a first type, a server device, a client device, and a computer readable medium.

**BACKGROUND**

A decentralized transaction system, transaction database or distributed ledger is any protocol in computer networks that brings about consensus regarding its transactions and their sequence. A common form of such a system is based on a blockchain and forms the basis of many so-called cryptocurrencies. In a cryptocurrency, cryptographic tokens are distributed across multiple clients. The clients can transfer the tokens among each other, or to and from a market maker. Cryptography and distributed ledger systems ensure that a transfer cannot easily be forged or repudiated.

Having a secure transfer system allows tokens of a first type to be exchanged for tokens of a second type. Colloquially, a token of the first type is bought, and has a price as an amount of tokens of the second type. Advanced cryptocurrencies use a mechanism known as "curved bonding", according to which a function known as a bonding curve is algorithmically defined, which influences the price of units (tokens) of the currency depending on the current supply of tokens.

A known method for managing a cryptocurrency with "curved bonding" is disclosed in international patent application WO 2019/043668 A1. In the known method, a plurality of users are provided with an in- marketplace wallet, suitable for storing linked digital tokens that are linked in value to cryptocurrency tokens and that are required to transact on a digital marketplace platform. A cryptocurrency reserve is provided suitable for storing a plurality of cryptocurrency tokens. In response to a user purchasing linked digital tokens from a marketplace store, linked digital tokens are transferred to the in- marketplace wallet of the user and an equivalent value of cryptocurrency tokens are transferred to the cryptocurrency reserve. In response to a user withdrawing a number of linked digital tokens from the in-marketplace wallet of the user, the desired number of linked digital tokens is removed from the user's in- marketplace wallet and an equivalent value of cryptocurrency tokens is transferred from the cryptocurrency reserve to an out-of- marketplace wallet of the user, the out-of- marketplace wallet suitable for storing cryptocurrency tokens outside of the marketplace platform.

Figure 10 of the cited patent application shows a graph illustrating how bonding of tokens may be applied. Token bonding is used to introduce a hierarchy of tokens which are fundamentally be related to each other. Token bonding is a means of token generation with a predefined price-supply relationship or curve. This may be achieved through a smart contract: users deposit a reserve currency into the smart contract address, and in turn receive newly-minted tokens. The deposit may be locked up, to be returned to sellers of the token at a later date. The price the user pays per token may be dictated by the aforementioned curve. At any point, users may be able to exchange their minted tokens for the original reserve currency at a price dictated by the same curve. Sell and buy curves may be distinct.

For an additional x tokens to be purchased, the smart contract may look up the appropriate point on the curve based on existing circulating supply and determine the amount to be paid in the native token for the bundle of x tokens to be generated. A similar process may be provided for selling tokens which destroys these tokens by removing them from circulation and moving the total token supply backward along the bonding curve. Since the token may be 100% collateralized, the system may provide enough reserve currency stored to compensate the sold tokens. The bonding curve is defined as

$$f(x) = \frac{x}{c(a+x^b)}, \text{ where } a > 0 \text{ and } 0.5 < b < 1; \ c > 1$$

The integral of this function involves the evaluation of hypergeometric function, which does not have a closed form and are approximated using series.

SUMMARY

A disadvantage of the known system is that integrating bond curves in a smart contract is an expensive operation. Due to the nature of smart contracts it is ill-suited to complex processing, such as mathematical processing. For example, a function defining a bonding curve such as in the known system, would require the evaluation of hypergeometric functions. These are known to be advanced mathematical functions. No closed form is known for such functions; they can be approximated by evaluating series.

As said, smart contracts, are not suited for performing mathematical computation, such as series summation.

In an embodiment, a smart contract approximates a desired shape of a bonding curve by multiple curve segments. The curve segments concatenate, and together they define the entire bonding curve. While a single polynomial cannot easily approximate a desired curve, especially not with low degree and over a large range, this can be done by concatenating multiple curve segments. For example, one may define the curve segment, e.g., using a parametric equation, such that it has a closed form antiderivative. For example, the equation may be a summation of terms that have closed form integrals. Examples of such terms include monomials ($ax^b$), possibly with integer exponent $b$, possibly with fractional exponent $b$, and exponential functions ($ae^{-bx}$). A useful term are constants. For example, a trailing curve segment may be a constant. Such a segment is useful if long-term convergence is desired.

For example, second type crypto tokens may be exchanged for an amount of newly minted, that is created, first type crypto tokens, e.g., as defined by a smart contract create function. The amount of second type crypto tokens that is needed is determined by integrating a bonding curve, as defined by multiple curve segments. Likewise, second type crypto tokens may be transferred in return for annulling an amount of previously created first type crypto tokens, e.g., as defined by a smart contract annul function. The amount of second type crypto tokens that is needed is determined by integrating a bonding curve, as defined by multiple curve segments.

Integrating along multiple curve segments may involve integrating from a start supply to an end supply along the same curve segment. The integrating may also be from a start supply to the end of the curve and from the beginning of a next curve to the end supply; There may even be one or more curve segment in between that are integrated in whole. In an embodiment, the complete integration of a curve segment, may be precomputed.

For example, instead of using a bonding curve as defined in the known system, the curve may be approximated by multiple curve segments. The curve segments can be integrated much easier. For example, a closed form integrand may be defined for it, so that the integrand can be obtained by substitution of the relevant begin and end point, that is current supply and new supply, or begin point end the relevant endpoint of the curve.

For example, in an embodiment, a smart contract from a distributed ledger defines a bonding curve as a sequence of curve segments. A creation or annul function of the smart contract may integrate a bonding curve starting from the current supply size to a new supply size to determine an amount of crypto tokens of a second type. The crypto tokens of the second type may be transferred to or from a pool associated with the smart contract, while crypto tokens of the first type may be transferred to a user or may be destroyed. The current supply size of first type tokens may be updated correspondingly.

An advantage of using curve segments is that the segments can be parametrized with simpler functions, e.g., a summation of terms that have closed form integrand, such as polynomials, and generalized polynomials. Such concatenated curve segments can approximate a desired bonding curve shape, and compute the same integrand values, or close approximation thereto, at much lower cost. This makes this configuration better suited to the computations supported by smart contracts.

Another advantage is that the shape of the bonding curve can later be updated. One way to do this, is to fit the curve segments subject to constraints. In an embodiment, the constraints impose linear conditions on the parameters, so that the fitting can be performed by solving a linear set of equations. For example, the constraints may be on the connecting points between the curve, e.g., that they connect and that a derivative is equal. A constraint may also be that one or more higher order derivatives are equal, e.g., second order derivative. Another constraint may be on the shape of the bonding curve, e.g., that is non-decreasing, e.g., has a non-negative first derivative everywhere, but also where it is flat, where it bends-up, and so on. Finally, an important consideration is that the integral over the bonding curve, form zero up to the current supply is related to the size of a pool, e.g., a wallet of reserved second type crypto tokens. Typically, the constraint is that the two amounts are equal, although this is not necessary.

For example, in an embodiment, a bonding curve may be defined using three segments, e.g., using polynomials of degree 3. For example, in an embodiment, a bonding curve may be defined using four segments, e.g., using polynomials of degree 3 for the first three segments, and a constant term for the final segment.

In an embodiment, multiple bonding curves are defined. In particular, a creating function and an annul function may use different bonding curves. The bonding curve for creation should lie above the curve for annulment; that is, creating new first type tokens needs to exchange at least as much, or more, second type tokens, as that annulling the first type tokens gives back in second type tokens. For example, a second bonding curve may be defined in terms of a second bonding curve, e.g., a percentage above or below it. For example, a first and second bonding curve may be defined from a medium bonding curve.

The constraints may be defined in the smart contract. For example, an update function may fit the curve segments, according to constraints given in the smart contract and one or more new parameters, in particular, a new size of the pool with second type tokens. On the other hand also the constraints may be updatable. The latter gives an opportunity to further simplify computation done. For example, the bonding curve may be started off with a single segment, e.g., defined by a single equation. For example, the single equation may be an exponential ($e^{bx}$) for a positive but very small $b$. This equation defines a curve that is initially flat, but at some point starts to increase strongly. Before that point is reached the bonding curve is updated to new bonding curve, in which one or more additional segments are defined, e.g., to curb the exponential growth. For example, the new segments may cause the bonding curve to flatten, possibly even to converge to a value.

A further aspect is a method for maintaining crypto tokens of the first type. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading.

**BRIEF DESCRIPTION OF DRAWINGS**

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of a client device,
Figure 1b schematically shows an example of an embodiment of a server device,
Figure 1c schematically shows an example of an embodiment of a cryptographic token system,
Figure 2 schematically shows an example of an embodiment of a blockchain,
Figure 3a schematically shows an example of an embodiment of a bonding curve,
Figure 3b schematically shows an example of an embodiment of a bonding curve,
Figure 3c schematically shows an example of an embodiment of a bonding curve,
Figure 3d schematically shows an example of an embodiment of updating a bonding curve,
Figure 3e schematically shows an example of an embodiment of a bonding curve,
Figure 4 schematically shows an example of an embodiment of updating a bonding curve,
Figure 5 schematically shows an example of an embodiment of a method for maintaining crypto tokens of a first type,
Figure 6 schematically shows an example of an embodiment of a method for maintaining crypto tokens of a first type,
Figure 7a schematically shows a computer readable medium having a writable part comprising a computer program according to an embodiment,
Figure 7b schematically shows a representation of a processor system according to an embodiment.

**Reference signs list**

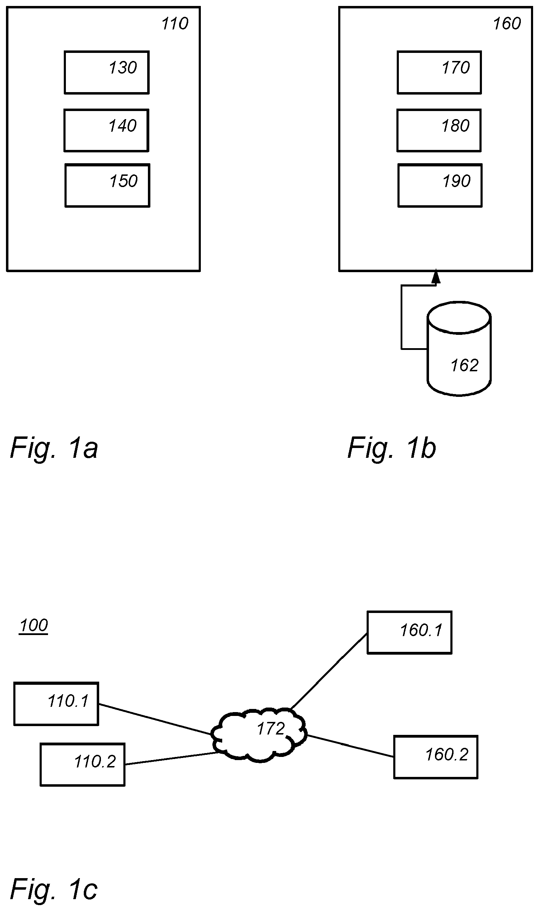

The following list of references and abbreviations corresponds to figures 1a-4, 7a, 7b, and is provided for facilitating the interpretation of the drawings and shall not be construed as limiting the claims.

| | |
|---|---|
| 100 | a crypto token system |
| 110, 110.1, 110.2 | a client device |
| 130 | a processor system |
| 140 | a storage |
| 150 | a communication interface |
| 160, 160.1, 160.2 | a server device |
| 162 | a database |
| 170 | a processor system |
| 180 | a storage |
| 190 | a communication interface |
| 172 | a computer network |
| 210 | a blockchain |
| 220 | a smart contract |
| 221 | a create function |
| 222 | an annul function |
| 223 | an update function |

| 231-234 | a state |
|---|---|
| 241-242 | a crypto token transfer |
| 301 | a bonding curve |
| 311 | an amount of crypto tokens of the first type |
| 312 | an amount of crypto tokens of the second type |
| 313 | an amount of crypto tokens of the second type |
| 314 | an amount of crypto tokens of the second type |
| X1, X2 | an amount of crypto tokens of the first type |
| 315 | current supply of crypto tokens of the first type |
| 330 | state information |
| 321-323 | curve segment parameters |
| 324-326 | curve segment parameters |
| 331-335 | curve segment parameters |

| 1000 | a computer readable medium |
|---|---|
| 1010 | a writable part |
| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

## DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

**Figure 1a** schematically shows an example of an embodiment of a client device 110. **Figure 1b** schematically shows an example of an embodiment of a server device 160.

For example, server device 160 may be configured to maintain crypto tokens of a first type. For example, server device 160 may be configured to obtain a smart contract from a blockchain to receive a creation request for creating tokens of the first type, or an annul request for annulling tokens of the first type, or an update request to update a bonding curve. For example, server device 160 may be configured to retrieve a smart contract from a blockchain that implements these functions, and to execute the corresponding computer code in the smart contract. In response, server device 160 may include data reflecting the transaction(s) in a new block for the blockchain. The information may reflect the transaction, showing that a user obtained the tokens or that the tokens were removed from the user, or state information of the contract, e.g., including a new bonding curve definition or a new current supply, etc. The server device is sometimes referred to as a miner, or mining device, or as a minter, or minting device.

For example, client device 110 may be configured to maintain a wallet. For example, the client device 110 may be configured to send a request to server device 160 for tokens of the first type, or to annul tokens of the first type, etc. Client device 110 may also send an update request to update the bonding curve. For example, an update request must be linked to a particular identity, e.g., signed by a particular private key.

Client device 110 may comprise a processor system 130, a storage 140, and a communication interface 150. Server device 160 may comprise a processor system 160, a storage 180, and a communication interface 190. Storage 140 and 180 may be electronic storage. The storage may comprise local storage, e.g., a local hard drive or electronic memory. Storage 140 and 180 may comprise non-local storage, e.g., cloud storage. In the latter case, storage 140 and 180 may comprise a storage interface to the non-local storage.

Client device 110 and server device 160 may be part of a crypto token system, e.g., crypto token system. Client device 110 and server device 160 may communicate internally, with other systems, external storage, input devices, output devices, and/or one or more sensors over a computer network. The computer network may be an internet, an intranet, a LAN, a WLAN, etc. The computer network may be the Internet. The system comprises a connection interface which is arranged to communicate within the system or outside of the system as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The communication interface 150 may be used to send or receive digital data, e.g., request to create or annul cryptographic tokens. The communication interface 190 may be used to send or receive digital data, e.g., request to create or annul cryptographic tokens. The communication interface 190 may be used to communicate with other server devices, e.g., to distribute a new block of a blockchain.

The execution of devices 110 and 160 may be implemented in a processor system, e.g., one or more processor circuits, e.g., microprocessors, examples of which are shown herein. The processor system may comprise one or more GPUs and/or CPUs. Devices 110 and 160 System 100 may comprise multiple processors, which may be distributed over different locations. For example, devices 110 and 160 may use cloud computing.

The devices 110 and 160 may comprise functional units that may be functional units of the processor system. For example, the functional units shown may be wholly or partially implemented in computer instructions that are stored at the device, e.g., in an electronic memory of the device, and are executable by a microprocessor of the device. In hybrid embodiments, functional units are implemented partially in hardware, e.g., as coprocessors, e.g., cryptographic coprocessors, and partially in software stored and executed on the device.

**Figure 1c** schematically shows an example of an embodiment of a cryptographic token system. System 100 comprises multiple client devices; shown are client device 110.1 and 110.2. System 100 comprises multiple server devices; shown are server device 160.1 and 160.2. The devices are connected through a computer network 172, e.g., the internet. The client and server device may be according to an embodiment. The client devices may cooperate among each other to transfer cryptographic tokens of the first type. The client devices may interact with a server device to create to annul a cryptographic token of the first type, e.g., in exchange for cryptographic tokens of the second type.

Storage may be implemented as an electronic memory, say a flash memory, or magnetic memory, say hard disk or the like. Storage may comprise multiple discrete memories together making up storage 140, 180. Storage may comprise a temporary memory, say a RAM. The storage may be cloud storage.

Typically, the client device 110 and server device 160 each comprise a microprocessor which executes appropriate software stored at the system; for example, that software may have been downloaded and/or stored in a corresponding memory, e.g., a volatile memory such as RAM or a non-volatile memory such as Flash. Alternatively, the systems may, in whole or in part, be implemented in programmable logic, e.g., as field-programmable gate array (FPGA). The systems may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, client device 110 and server device 160 may comprise circuits for the cryptographic processing, and/or arithmetic processing.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

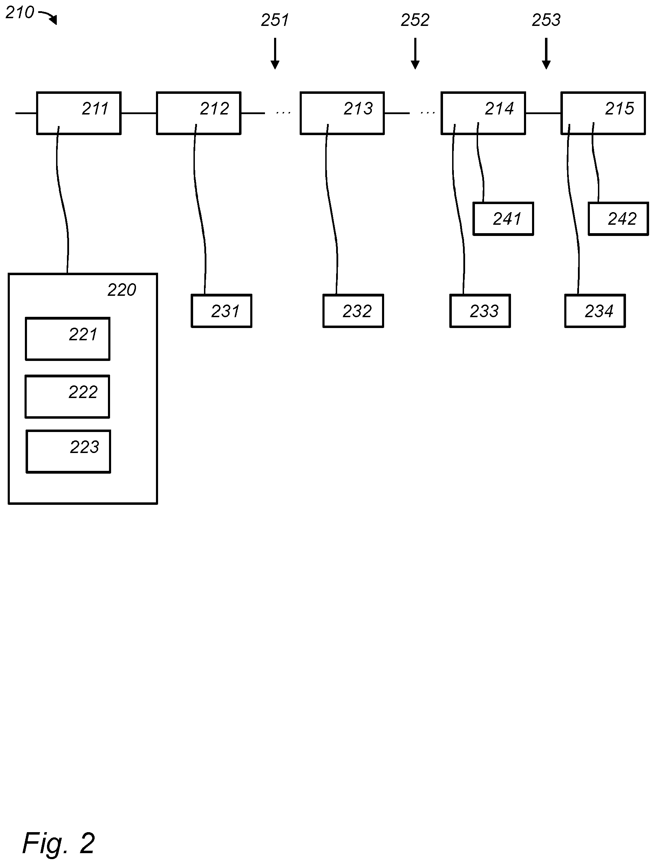

**Figure 2** schematically shows an example of an embodiment of a blockchain 210. Blockchains are particular example of distributed ledgers that has shown to work well in embodiments. Other examples of distributed ledgers can also be used. For example, in an embodiment the distributed ledger may be a hash graph, a tangle or a lattice. The distributed ledger comprises multiple blocks, which are linked to each other. The blocks may comprise transactional data and metadata. The metadata may comprise linking information and a consensus mechanism. Embodiments are primarily described with reference to a blockchain, but such an embodiment could be changed to use another type of distributed ledger, in particular a graph based one.

Blockchain 210 comprises multiple blocks, which are linked to each other in a sequence. For example, the linkage may comprise a consensus mechanism. For example, such a mechanism may be a proof of work, e.g., as in Bitcoin. The mechanism may be a proof of stake. A consensus mechanism allows distributed trust in the distributed ledger. Other consensus mechanism, e.g., as known in the art may be used in an embodiment.

To aid the discussion, figure 2 shows three point in the blockchain: points 251, 252, and 253, corresponding to three moments in time. At point 251, blocks up to block 213 have been created, but not yet block 213. At point 252, blocks up to block 214 have been created, but not yet block 214. At point 253, blocks up to block 215 have been created, but not yet block 215.

Show in blockchain 210 are multiple blocks, in this case, 5 blocks: blocks 211, 212, 213, 214, and 215. There may be more or fewer blocks. A block may comprise data related to the distributed ledger mechanism, e.g., consensus data, but also other information. In particular a block may comprise transactions, in which tokens are bound to an address, e.g., related to the public key of a client, e.g., as incorporated in a client device. Blocks may also include other information.

In particular, a block may comprise a smart contract. Block 211 shows an example, in the form of a smart contract 220. A smart contract is typically written in a computer language. An example of a computer language that is optimized for smart contracts is solidity. For example, in an embodiment blockchain 210 may be the Ethereum blockchain, and the smart contract may be written in solidity. It is not required to restrict to a particular language or blockchain though. For example, the Ethereum blockchain may be used as described in the paper "Ethereum: a secure decentralised generalised transaction ledger", by G. Wood, e.g., the Istanbul version 80085f7 of 2021-07-11.

In an embodiment, blockchain 210 is used to create and annul cryptographic tokens of a first type. Colloquially, creating new cryptographic tokens is sometimes referred to a 'buying' the tokens; annulling a cryptographic token is sometimes referred to as 'selling' the tokens.

The smart contract implements multiple functions, including at least a create function 221 and an annul function 222 (also called a sell function). Optionally, the contract may implement an update function 223. Colloquially, the create function is also called a buy function and the annul function 222 a sell function. This is not entirely accurate as typically the tokens no longer exist once they are annulled. The total supply of tokens decreases after an annul action. The annul function is also referred to as a destroy function.

The server executes the create function and as a result obtains a new state. For example, the new state may reflect the increased number of crypto tokens of the first type that are now in existence (referred to as the supply). The server may also obtain a transaction that indicates that the new cryptographic tokens are transferred to the first user, and/or a transaction that indicates that the existing cryptographic tokens of the second type are transferred from the first user to a wallet associated with the smart contract. The smart contract is referred to as the market maker. An amount of second type tokens may be kept in reserve by the market maker, e.g., in wallet. This part of the wallet is referred to as the pool or pool balance. The same wallet may be used to hold tokens not part of the pool. One may also reserve use of this wallet for only the pool.

The server client writes on the blockchain, e.g., includes in a block, the new state, and the new crypto tokens of the first type, the transferred crypto tokens of the second type are written on this or another blockchain. Tokens of the first type and the state may be put on separate blockchains as well.

Suppose a first user wants to buy a number of crypto tokens of a first type. He/she sends a request through a client device to a server device. The request may be sent to multiple server devices. The request may include, e.g.,

- the amount x crypto tokens of a first type requested
- instructions to transfer y crypto tokens of a second type
- an address to bind the crypto tokens of a first type to.

For example, consider that the request is sent at point 252, just before clock 214 is created.

The server device retrieves the smart contract 220 from the blockchain. The smart contract uses a state which may be updated. The server device retrieves the current state from the blockchain. Blockchain 210 shows states 231 and 232 before point 252, so that the server device retrieves state 232.

To determine the amount of cryptographic tokens of the second type (y) that are exchanged for an amount of cryptographic tokens of the first type (x), colloquially referred to as the price, the smart contract uses a bonding curve. The smart contract may comprise a definition of the bonding curve. The definition of the bonding curve may also be in a state. The definition of the bonding curve may be the smart contract, until a new definition in a written state overrides it.

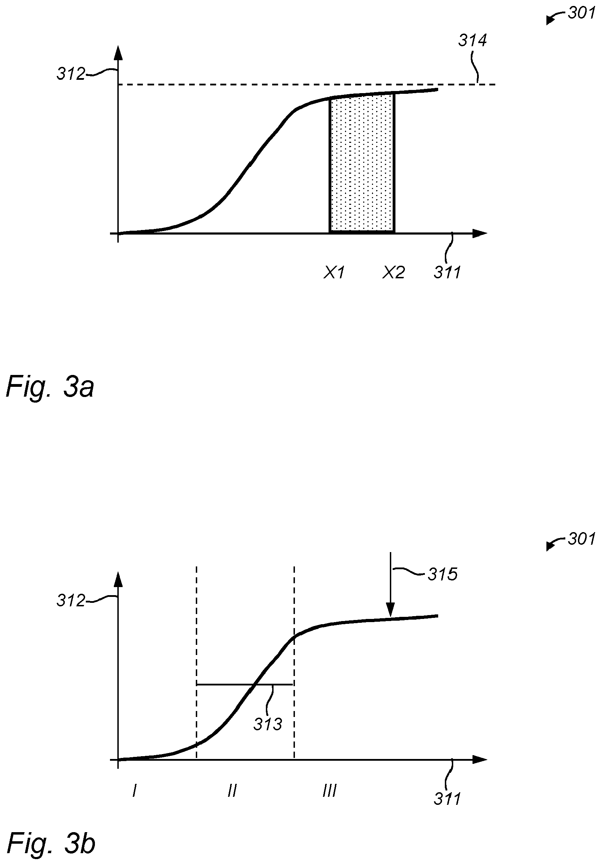

**Figure 3a** schematically shows an example of an embodiment of a bonding curve 301. On the x-axis 311 is the amount of crypto tokens of the first type. On the y-axis 312 is the amount of crypto tokens of the second type. Suppose the supply of tokens of the first type is currently X1, and the first user wants to obtain (X2-X1) tokens, so that the new supply will become X2. To determine the amount of tokens of the second type that are to be exchanged, one integrated the bonding curve from X1 to X2. Note that X1 and X2 may be integral number, but this is not necessary. Tokens may also be created and annulled in fractions of integer tokens. A new state written to the ledger may include that the new supply of tokens is X2.

For example, tokens of the first type may be a new type of token created according to an embodiment, e.g., to facilitate some new applications that requires token management. This could range from shops, to games, to services, to dating application. Tokens of the second type are typically existing tokens that can be transferred digitally. For example, the tokens of the second type may be bitcoin or ether, or the like.

The bonding curve is typically only used when creating or annulling tokens with respect to the market maker. The tokens of the first type could be transferred on a secondary market as well, and in theory the tokens may be exchanged for whatever the parties agree to. However, as both parties also have the option to obtain tokens from the market maker, or to have them annulled by the market maker, the bonding curve will have a strong influence on the secondary market. One motivation to use bonding curves is to avoid large price fluctuations.

The bonding curve may have an S-shape, or sigmoidal shape, e.g., as shown in figure 3a. When supply on the x-axis is low, the tokens can be obtained easily. When the market is mature, the price typically converges to a value 314. This is not needed, though. Instead of convergence, e.g., the price increase may be much flatter than in middle part of figure 3a. A sigmoidal shape is not necessary though. For example, a bonding curve may have a bend-up shape.

In an embodiment, the bonding curve is defined by multiple curve segments. The multiple segments are concatenated and together define the bonding curve. This has the advantage that different equations can be used for the different curve segments. If one function were used to define the entire curve, then this is would be complicated function to accommodate the desired shape of the curve. Such a complicated function is hard to integrate.

On the other hand, when segments are used, one would integrate along the segment or segments that defines that part of the bonding curve.

Computation that are done in a smart contract are typically very resource scare. The computation is said to be 'on chain' in this case. On chain computation are expensive, since, inter alia, the consensus mechanism may require the computations to be repeated many times, to verify the ledger. This makes on chain computation inefficient, and expensive. There is therefore a desire to simplify computations. Using curve segments allows the individual segments to be simpler, and thus easier to integrate.

The shape of a curve segment may be defined by parameters. For example, they may be defined by coefficients. For example, a curve segment may be a polynomial curve. For example, they may be polynomials of low degree, e.g., at most degree 5, at most degree 4, at most degree 3. In experiments, it was found that using three curve segments and polynomials of degree 3 (cubic polynomials) worked well. Two segments, or lower degree polynomials turns out to give too little control over the shape of bonding curve-for example, one strict requirement is that the bonding curve should be continuous and never decreasing. Having more than three segments was not found necessary for the bonding curves such as shown in figure 3a. In an embodiment, the number of segments may be larger, to accommodate more complicated shapes. In particular, the number of segments may be increased after creation of the smart contract.

The annul function 222 works in a similar manner. Suppose a user has X2 tokens of the first type, and want to annul (X2-X1) of them, he will get an amount of tokens of the second type in response that is determined by the integral over the bonding curve, in this case the integral from X2 to X1 though.

In an embodiment, the create function and annul function use the same bonding curve. This is not necessary though. In an embodiment, the create function uses a create bonding curve, while the annul function uses an annul bonding curve. Typically, the create bonding curve is strictly higher than the annul curve. This difference is sometimes referred to as a buy-sell spread. Having a difference between the create bonding curve and the annul bonding curve avoids so-called front-running attacks. In a front running attack, a user exploits knowledge of an upcoming, but not yet executed transaction, say a create transaction. Before the upcoming create transaction, the attacker performs a create transaction of its own, and ensures that his order is executed before the order under attack, so called, front running. After the attacked order is executed, the attacker annuls his tokens, but as the supply is now higher, he will get more tokens of the second type than he started with.

Using different bonding curves can be accommodated in a variety of ways. For example, the smart contract may define two bonding curves: a first and a second bonding curve. These curves may be independent, and called by the create and annul function respectively. Should one or both curves need to be refitted, this can be done under the condition that first curve is higher than the second curve.

Another possibility is that one of the two curves is related to the other. For example, the curve used for creation may be a percentage above the curve for annulment. Another possibility is that both curves are derived from a medium curve. For example, the first curve may be a percentage higher, while the second curve may be a percentage lower than the medium curve.

Yet another way to accommodate different curves is to have a delay between updating the supply point for annulment versus creation. For example, if x tokens are created, the supply of tokens is immediately increased by $x$, for use by the creation function. However, the annulment function continues to use the previous supply, which represent a lower value. For example, suppose $s_1$ is to supply before creation and $s_2$ the supply after creation. Then the unit price for a new creation request would be $f(s_2)$, which is integrated from them until the further supply point is reached. However, for annulment one might use $f(s_2) + (f(s_1) - f(s_2))\lambda$, wherein $\lambda$ decays from 1 to 0 in a certain time. For example, $\lambda$ may decay exponentially with time, e.g., according to an exponential decay function.

Accordingly, the create function 221 in smart contract 220 may be configured to

    ◦ integrate the bonding curve from the current supply to the current supply + x to obtain the required amount of crypto tokens of the second type
    ◦ Transfers the crypto tokens of the second type to a pool associated with the smart contract
    ◦ Increases the current supply with $x$, and bind x crypto tokens of the first type to the address.

Accordingly, block 214 may comprise a new state 233, e.g., comprising the new supply, and transaction(s) 241.

An annul function may work in reverse. For example, a request to annul x crypto tokens of the first type may be implemented by annul function 222 as follows:

◦ integrate the bonding curve from the current supply -x to the current supply to obtain the required amount of crypto tokens of the second type

◦ Transfers the crypto tokens of the second type from the pool associated with the smart contract to an address associated with the user.

◦ Mark as invalid the x crypto tokens of the first type for the user.

◦ Decrease the current supply with x

For example, if the annul request is received at point 253, then block 215 may comprise a new state 234, e.g., comprising the new supply, and transaction(s) 242.

The result of the create or annul function may be one or two transactions for the tokens for the first and second type respectively, and a new state. These three items may be written on a blockchain, such as the blockchain 210.

Both the create and annul function may refuse to perform the create or annul task if preconditions are not met. For example, the amount of crypto tokens of the second type available for a create request should be large enough, e.g., at least as large as the integral indicates. For example, the amount of crypto tokens of the second type available in the pool for an annul request should be large enough, e.g., at least as large as the integral indicates. The second condition can be enforced though by enforcing that the size of the pool is always equal to the size of the integral of the annul bonding curve from 0 up to the current supply point.

Update function 223 may be called to change the shape of the bonding curve. Examples of update function 223 are given herein.

For completeness, Figure 3b schematically shows an example of an embodiment of a bonding curve as used when the market is in its infancy. Shown are three phases, sometimes called regimes. In a first regime I, tokens of the first type are created. Although the bonding curve indicates that tokens of the second type should be exchanged for them, to fill a pool this is not done in regime I. For example, these tokens may be used as an incentive for early investors, inventors, and the like. In a second phase, or regime II, tokens of the first type are exchanged for tokens of the second type. However, instead of the price indicated by the bonding curve, a constant price 313 is used. The price is chosen such that at the end of regime II, the size of the pool (in tokens of the second type) is as large as the integral of the bonding curve up to the end of regime II. Regime II may for example, be used to start-up the system. For example, early investors may perform this task. In regime III, the prices follow the bonding curve as indicated above. Should the supply drop from regime III into the part of the curve for regime II or I, then the normal prices as indicated by the bonding curve are used. Various refinements are possible. For example, the system may refuse to annul tokens if that would cause the supply to drop between a certain amount. Two bonding curves may be used, etc.

In an embodiment, the market maker, e.g., in a state on the distributed ledger maintains a current supply of first type tokens. For example, figure 3b shows at 315 the current supply of tokens. If first type tokens are created, the amount of second type tokens needed for it is obtained by integrating the curve starting from point 315 to the right; that is toward higher supply as tokens are created. If first type tokens are annulled, the amount of second type tokens offered in return is obtained by integrating the curve starting from point 315 to the left; that is toward lower supply as tokens are destroyed.

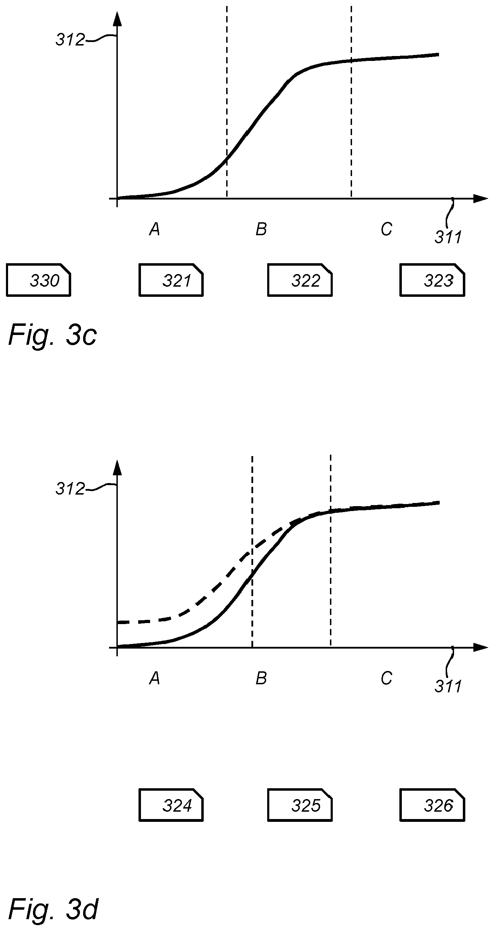

Figure 3c schematically shows an example of an embodiment of a bonding curve. Shown in figure 3c are three curve segments: segments A, B and C. In each curve segment the bonding curve is defined by one or more parameters. For example, parameters 321 define segment A, parameters 322 define segment B, and parameters 323 define segment C. The parameters 321-323 may be included in the state, especially if the bonding curve is updatable. Also shown in figure 3c is supply 330, that is the amount of tokens of the first type that are currently in existing, e.g., the sum of successful creation requests minus the sum of successful annulment requests.

A convenient way to define the curve segments is to use polynomials. The parameters 321-323 may comprise the coefficients of the polynomials. The exponents in polynomials are integral. The curves may be defined by so-called generalized polynomials, e.g., sums of the terms of the form $ax^b$, wherein $b$ may be non-integer, though, typically, rational. Generalized polynomials share with regular polynomials, that they can be integrated easily and in closed form. Polynomials can be conveniently expressed in the form of Bezier splines.

It is possible that the segments, e.g., segment A, B, and C, follow the same division as the regimes I, II and III, but this is not all necessary. On the contrary, it was found that flexibility in choosing where segments start and end can allow a better fit. For example, segment A can be larger than regime I, while segment B, may be smaller than regime II. Regime III may start before segment C. Where the best points for starting and ending segments may depend on the fitting of the curves.

**Figure 3d** schematically shows an example of an embodiment of updating a bonding curve. There can be several reasons why a bonding curve may need to be changed after the smart contract has been defined. A typical reason is that the amount of crypto tokens of the second type in the pool changed, and is not equal to the amount of crypto tokens indicated by the integral of the bonding curve.

For example, in a two bonding curve system, e.g., in which creation will gain the market maker more tokens than annulment costs, the market maker may gradually have more tokens of the second type available than the integral of the bonding curve represents.

The tokens of the second type that are accrued by a buy-sell spread may be collected by the market maker, e.g., in the same wallet as the pool, or in a separate wallet. If all or part of the additional tokens are added to the pool, the integral of the bonding curve may be lower than the new amount in the pool.

In a typical embodiment, the pool balance always reflects the integral value, at least once in operation and/or general trading, e.g., when in regime III. The update function may change the bonding curve such that the new integral indicates, e.g., equals, the new pool balance. For example, the marked maker may be constructed such that the integral value and pool balance can never be different; so that one only updates both together, accordingly.

The tokens of the second type that are accrued by a buy-sell spread may be collected by the market maker, e.g., in the same wallet as the pool. For example, the market maker may have a wallet, a subset of which holds the pool balance, which may exactly reflect the integral, e.g., after the system is in general operation. A second subset of the market maker's wallet could hold further value, e.g., an income generated by the market maker. In this case, the value of the wallet may be different from the integral and from the pool balance, though the latter two may be perfectly balanced. For example, changing the pool balance may be done by calling an update function which would adapt the pool balance and curve shape together, transferring value to or from the pool balance part of the wallet. The pool balance may be defined as the amount indicated by the integral of the bonding curve, e.g., the integral from supply zero to current supply. In an embodiment, it is guaranteed that the amount in the wallet is at least as high as the integral indicates. If multiple bonding curves are used, the annul bonding curve may be used to compute the pool balance.

The tokens of the second type that are accrued by a buy-sell spread may also or instead be collected separately. For example, a creation bonding curve may be a percentage over the annul bonding curve. For each creation transaction the surplus may be collected. For example, a second pool, e.g., a second wallet of the market maker may collect the fees. At some point, the fees in the second pool, or part thereof, may be added to the first pool. In this case, the pool becomes larger than the integral of the bonding curve suggests, which may be corrected by refitting the bonding curve.

Shown in figure 3d is a bonding curve as a solid line, and an updated curve as the dashed line.

Updating a bonding curve may follow the same process as selecting the initial bonding curve for the initial smart contract. In an embodiment, a parametric representation of the curve segments is chosen. For example, the parameters for a segment may be between which supply points a curve segment is valid, e.g., from 0 to $s_1$, from $s_1$ to $s_2$, and so on, and coefficients of an equation defining the curve. The constraints may be of three kinds.

First constraints may indicate that the bonding curve is a concatenation of curve segments. For example, constraints of this type include, that the end point of one segment should equal the begin point of a next segment. Typically, one also requires that derivatives up to some order are equal, e.g., first order derivative, but possibly also second order derivative, or possibly even higher. Insisting that derivatives are equal will ensure that the segments link smoothly together.

Second constraints may indicate a desired shape of the bonding curve, to make the curve suitable for bonding. For example, the bonding curve should be never decreasing. Other constraints that may be imposed, is that the second derivative in the first regime I should be positive, while in the third regimes III it should be negative. This reflects that desire that as the cryptocurrency matures, prices should stabilize.

For example, in an embodiment, the bonding curve is defined by at least three segments, an initial segment (e.g., segment A) and a trailing segment (e.g., segment C). Between the initial segment and trailing segment there may be one or more connecting segments, (e.g., segment B). An advantage is that the initial and trailing segment can be made flat, while the connecting segment can be used to tie both segment smoothly together. It was found that combining two flat regions together with only two segments, or with only second degree polynomials was hard.

In an embodiment, the trailing segment C has degree zero, e.g., is constant. A polynomial of positive degree cannot converge to a value, having a trailing section that is constant avoids this problem. Convergence can also be obtained by allowing in the polynomial summands, exponential terms in addition to monomials. In an embodiment, at least four segments are used, the trailing segment of which is constant. In an embodiment, at least three segments are used, the trailing segment of which has an exponential term.

Flatness conditions may also be explicit. For example, a requirement may be that the price increase in segment A, or region I, is related to another price increase, e.g., in region II or segment B. For example, the former may be, say, ¼ of the latter.

Note that if a polynomial representation is used the trailing segment cannot strictly converge to a value, e.g., value 314, if the polynomials has a positive degree. This can be avoided by selecting a polynomial that is close to and smaller than value 314 on a large segment, accepting that the curve will eventually be higher than any limiting value; although in practice this may not occur. Another solution is to allow sums of terms of the form $ax^b$, possibly for non-integral values of $b$, and exponential terms, e.g., of the form $ae^{-bx}$, typically for positive values of $b$. Such terms work well since they have a closed form integral $\frac{a}{b}e^{-bx}$ . This type of extended polynomials is especially useful for the trailing segment, as it allows convergence. For example, an equation of the form $a(1\text{-}be^{-cx})$ converges to $a$ as x increases. (using positive $b$ and $c$). This equation both a closed form integral and a closed form derivative, allowing it to be fitted.

Third constraint is that the pool content should be related to the integral of the bonding curve, in particular the annul curve. For example, the amount of second type tokens should be equal or more than the integral of the bonding curve. For example, the amount of second type tokens should be not-less than a percentage of the integral of the bonding curve. Said percentage could be less than 100%. In that case, the system will not be able to honor all annulment requests that may be made.

There can be several reasons why one would want to update or refit the bonding curve. For example, by increasing the bonding curve low supply values (e.g., near zero supply) the overall shape of the bonding curve becomes flatter. A flat bonding curve makes it less likely that second type tokens invested when creating first type tokens can be recovered later by annulling first type tokens. For example, when the pool is of a sufficient size, and/or the system of a sufficient maturity, second type tokens can be extracted. Such tokens can, e.g., be used to cover the costs of running the system. If the pool size decreases, the bonding curve may be adjusted downwards.

Given a new pool size, and a number of constraints the segments can be fitted. If the number of constraints is lower than the number of parameters, the curves can be optimized, e.g., optimized for flatness in regions I and III.

In an embodiment, the constraints impose linear relations on the parameters. In fact most of the constraints above imply linear relations on the parameters. An advantage is that fitting or refitting (updating) the bonding curve comprises solving a linear set of equations. This can be done cheaply even on chain. Even exponential terms may be fitted by linear equations assuming that the x-coordinate of the start of the segment is fixed and not fitted.

The updated bonding curve has new parameters. In figure 3d, these are shown as parameters 324, 325 and 326. As it happens the number of parameters is the same in this example, although the number of segments can also be changed.

In an embodiment, the bonding curve, in particular the annul bonding curve is updated under the constraint that the integral over the updated second bonding curve up to the current supply size is less or equal to the amount of crypto tokens of the second type in the pool. Before the updating function is called, the pool may be increased or decreased, by adding or removing second type tokens from it.

Updating the bonding curve, or curves, may be initiated by calling an update function 223. For security reasons, the update function may be restricted so certain callers, e.g., governors of the contract. Alternatively, the updating may be triggered automatically, e.g., as soon as a second pool exceed a predetermined value.

There may be more than one update function. The above update function may be used to match the bonding curve to a pool amount. However, an update function can also be used for governing. This could be a different function, e.g., a second update function. For example, it may turn out that the bonding curve is too steep or not steep enough in some places. An update function can then be called to update the constraints, and to refit the curve.

Updating the constraints can be used to avoid different regimes altogether. For example, one could initially start with a bonding curve which is bending-up across the whole supply range, and then slowly bending down the high-supply regime over time to achieve, e.g., the sigmoidal form shown in Figure 3a.

For example, one may increase the bend-up characteristic beyond the current trading point in order to increase security against a brute force 50% attack, e.g., by increasing the necessary capital to buy larger amounts of supply from the bonding curve. For example, one may reduce the slope in certain parts in order to decrease the related volatility.

Increasing a bonding curve in a region starting near supply zero, is also referred to as undergirding. An update action may be referred to as undergirding the bonding curve. In an embodiment, the definition of the bonding curve satisfies curvature conditions which relate to the fact that the curve should provide monotonously increasing price for increasing supply (first derivative >=0) while additionally in

- bend-up regimes the curve should be strictly bending-up (e.g., second derivative>=0, e.g., in the regime I)
- bend-down regimes the curvature should be strictly bending-down (e.g., second derivative<=0, while first derivative>=0, e.g., in all or part of regime III)

If desired, a constant trailing segment may be defined.

A bonding curve can advantageously be defined using adaptable cubic spline segments with adaptable parameters each, e.g., Bezier curves. This allows to formalize the constraints in a clear and efficiently solvable closed form.

Using an adaptable number of parametrized segments, with segments being given in a form such that at least 1st and 2nd derivatives exist, e.g., cubic splines, allows for many possibilities. In an embodiment, the number of regions is dynamically adaptable, e.g., through an update function. If forms are used in which the 2nd derivative is zero, e.g., quadratic, or linear order polynomials, make the bonding curve less smooth, and allows fewer conditions to be imposed.

On the other hand this can be compensated for by having more segments. Experiments required a larger number of segments to achieve comparable results to cubic splines making this approach more complex in the end. It is a possible embodiment though.

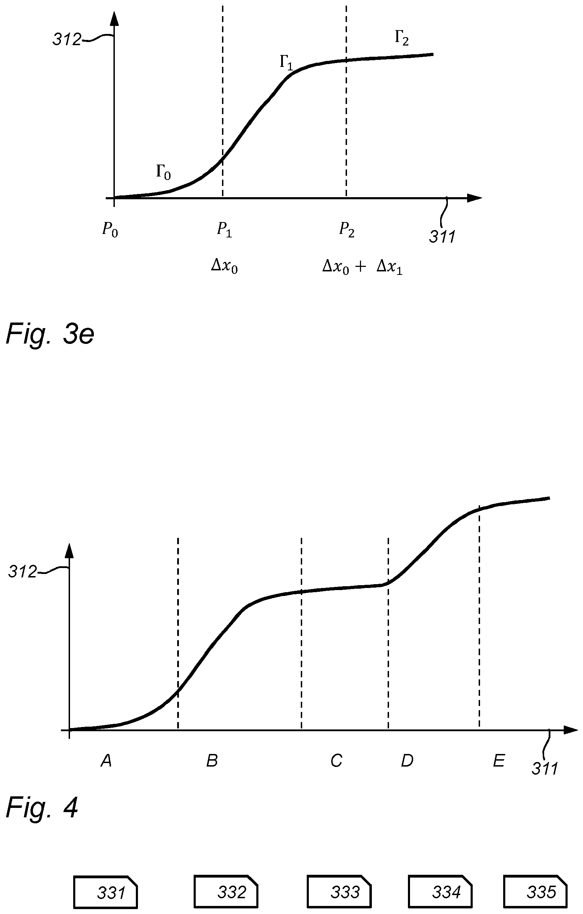

**Figure 3e** schematically shows an example of an embodiment of a bonding curve. The bonding curve shown in figure 3e is defined as a sequence of curve segments. Shown are three segments: $\Gamma_0$, $\Gamma_1$, and $\Gamma_2$. There could be two segments, or more than three segments. The y-coordinate of the beginning point of each segment is denoted $P_0$, $P_1$ and $P_2$. Note that $P_i$ indicates an amount of second type tokens, even though they are shown on the x-axis in figure 3e. The increases of the corresponding x-coordinates are denoted $\Delta x_0$ and $\Delta x_1$. Note that the x-coordinate corresponding to $P_0$ is zero.

In an embodiment, the curve segments are defined by polynomials, e.g., a polynomial mapping an x-coordinate to a y-coordinate. It is convenient to write the polynomials as a Bezier curve. An advantageous choice turns out to be cubic Bezier curves. To fit a cubic Bezier curve through consecutive points $P_i$, one may use the following formula. The values $a_i$ and $b_i$ are auxiliary to fit the curve.

$$\Gamma_i(t) = (1-t)^3 \cdot P_i + 3t(1-t)^2 \cdot a_i + 3t^2(1-t) \cdot b_i + t \cdot P_{i+1}$$

To fit the curves various conditions may be imposed. First, one may require continuous first and second derivative at the connecting points. Taking into account that the derivative is for t we may have:

$$\Gamma'_{i-1}(t=1)\frac{\Delta x_i}{\Delta x_{i-1}} = \Gamma'_i(t=0)$$

$$\Gamma''_{i-1}(t=1)\frac{\Delta x_i}{\Delta x_{i-1}} = \Gamma''_i(t=0)$$

Accordingly, we have

$$\Gamma'_i(t) = 3[-(1-t)^2 \cdot P_i + (1-3t)(1-t) \cdot a_i + t(2-3t) \cdot b_i + t^2 \cdot P_{i+1}]$$

and

$$\Gamma''_i(t) = 6[(1-t) \cdot P_i + (3t-2) \cdot a_i + (1-3t) \cdot b_i + t \cdot P_{i+1}]$$

At the connection points this means:

$$\Gamma'_i(t=0) = 3(-P_i + a_i)$$

$$\Gamma'_i(t=1) = 3(-b_i + P_{i+1})$$

$$\Gamma''_i(t=0) = 6(P_i - 2a_i + b_i)$$

$$\Gamma''_i(t=1) = 6(a_i - 2 \cdot b_i + P_{i+1})$$

For updating the curve to a new pool balance (undergirding), we integrate the curve $\Gamma_i$. To do so in parameter form, but retrieving the correct area, we need to care for substitution, wherein x is the current supply point. This assumes, x resides between $x_i$ and $x_{i+1}$.

$$\frac{x-x_i}{x_{i+1}-x_i} = t$$

$$\frac{\mathrm{d}t}{\mathrm{d}x} = \frac{1}{x_{i+1}-x_i} = \frac{1}{\Delta x_i}$$

$$\rightarrow \mathrm{d}x = \Delta x_i \cdot \mathrm{d}t$$

Because $\Delta x_i$ is constant during integration (no function of x), we can factor it out, hence:

$$\int \Gamma_i(x)\mathrm{d}x = \Delta x_i \cdot \int \Gamma_i(t)\mathrm{d}t$$

$$\Delta x_i \cdot \int \Gamma_i(t)\mathrm{d}t = \Delta x_i \cdot \frac{1}{4}[(-t^4 + 4t^3 - 6t^2 + 4t) \cdot P_i + (3t^4 - 8t + 6t) \cdot$$

$$a_i - (3t^4 - 4t^3) \cdot b_i + t4P_{i+1}] + C$$

For the complete curve section integral we have

$$\Delta x_i \cdot \int_0^1 \Gamma_i(t)\mathrm{d}t = \Delta x_i \cdot \frac{1}{4}(a_i + b_i + P_{i+1} + P_i)$$

and for the partial integral

$$\Delta x_i \cdot \int_0^{\tilde{t}} \Gamma_i(t)\mathrm{d}t = \Delta x_i \cdot \frac{1}{4}[(-\tilde{t}^4 + 4\tilde{t}^3 - 6\tilde{t}^2 + 4\tilde{t}) \cdot P_i + (3\tilde{t}^4 - 8\tilde{t} + 6\tilde{t}) \cdot$$

$$a_i - (3\tilde{t}^4 - 4\tilde{t}^3) \cdot b_i + \tilde{t}^4 P_{i+1}]$$

If the current supply point resides within segment I, one solves the partial integral there. Otherwise, for the other segments below, one can use the full integral equation (0->t->1) which does not depend on x but only $\Delta x$.

**Figure 4** schematically shows an example of an embodiment of updating a bonding curve. A second updating function for updating the second bonding curve, comprises increasing or decreasing the number of multiple curve segments. For example, figure 4 was obtained from figure 3a by adding two further segments D and E. The new segments may also have constraints, such as curvature constraints.

For example, introducing further regions or segments could be used to start off with a low number of regimes and only a bend-up curve, while later-on introducing a transition regime such that the thereby separated regimes can use different characteristics / different curvature conditions (e.g., progressing to the sigmoidal shape or allowing for a different bending strength for sub-regions).

Also here, the pool balance condition is a basic requirement for the bonding curve. That is the integral over the curve up to current supply should be related, e.g., equal or a percentage, etc., to the current pool size.

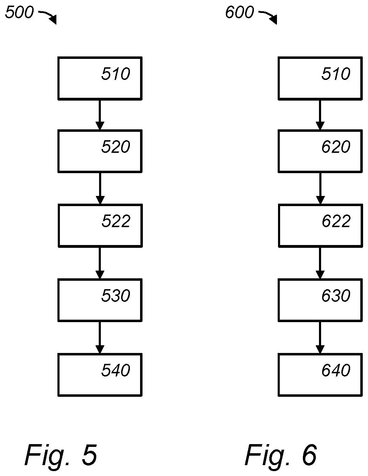

Figure 5 schematically shows an example of an embodiment of a method 500 for maintaining crypto tokens of a first type. Method 500 is computer-implemented and comprises:

- obtaining (510) a smart contract from a distributed ledger, the smart contract implementing a creation function for creating crypto tokens, the smart contract maintaining a current supply size indicating the number of crypto tokens of a first type so-far created, and a first bonding curve, the first bonding curve being defined as a sequence of multiple curve segments, a curve segment connecting to a subsequent curve segment,
- receiving (520) a creation request for creating an amount of crypto tokens of the first type, and in response executing the creation function of the smart contract, executing the creation function comprising

  - integrating (522) the first bonding curve from the current supply size to the current supply size increased with the amount of crypto tokens of the first type along the corresponding curve segments to determine an amount of crypto tokens of a second type,

- transferring (530) the amount of crypto tokens of the second type to a pool associated with the smart contract, and
- increasing (540) the current supply size with the amount of crypto tokens of the first type, and transferring the amount of crypto tokens of the first type.

Figure 6 schematically shows an example of an embodiment of a method 600 for maintaining crypto tokens of a first type. Method 600 is computer-implemented and comprises:

- obtaining (610) a smart contract from a distributed ledger, the smart contract implementing a creation function for creating crypto tokens, the smart contract maintaining a current supply size indicating the number of crypto tokens of a first type so-far created, and a first bonding curve, the first bonding curve being defined as a sequence of multiple curve segments, a curve segment connecting to a subsequent curve segment,
- receiving (620) an annulling request for annulling an amount of crypto tokens of the first type, and in response executing the annulling function of the smart contract, executing the annulling function comprising

    - integrating (622) the second bonding curve from the current supply size to the current supply size decreased with the amount of crypto tokens of the first type along the corresponding curve segments to determine an amount of crypto tokens of a second type,

- transferring (630) the amount of crypto tokens of the second type from the pool associated with the smart contract, and
- decreasing (640) the current supply size with the amount of crypto tokens of the first type.

The method 600 may further comprise transferring destroying the first type tokens, e.g., marking them invalid, transferring them to a market maker wallet, etc. Methods 500 and 600 may be combined, e.g., a method for maintaining first type token may comprise both the creation and annulment of said tokens.

For example, the methods may be computer implemented methods. For example, obtaining the smart contract from a distributed ledger may comprise retrieving a block from a distributed ledger, e.g., over a computer network, or in a local database. Executing the smart contract may be done on a microprocessor. For example, the smart contract may be written in an interpretive language, which may be executed by an interpreter, a virtual machine or the like. Integrating a curve may comprise executing computations, e.g., inserting a current supply and a new supply in a primitive, or antiderivative, of a bonding curve, a closed form integrant. The primitive may be in closed form and may comprise multiple primitive segments. Receiving a creation or annulment request may be over a computer network. Transferring first type tokens or second type tokens may comprise writing the transfer in a block for inclusion in a block of the distributed ledger. The block may comprise a consensus mechanism, e.g., a proof of work, or proof of stake.

Many different ways of executing the methods are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform method 500 and/or 600. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

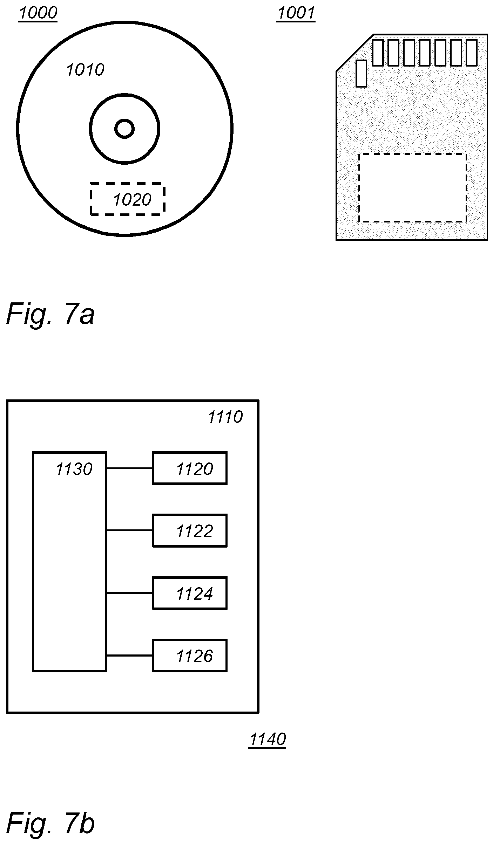

**Figure 7a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method of maintaining a crypto token, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said method.

**Figure 7b** shows in a schematic representation of a processor system 1140 according to an embodiment of a device for maintaining a crypto token. The processor system comprises one or more integrated circuits 1110. The architecture of the one or more integrated circuits 1110 is schematically shown in Figure 7b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., a device for maintaining a crypto token may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A computer-implemented method for maintaining crypto tokens of a first type, comprising

- obtaining a smart contract from a distributed ledger, the smart contract implementing a creation function for creating crypto tokens, the smart contract maintaining a current supply size indicating the number of crypto tokens of a first type so-far created, and a first bonding curve, the first bonding curve being defined as a sequence of multiple curve segments, a curve segment connecting to a subsequent curve segment,
- receiving a creation request for creating an amount of crypto tokens of the first type, and in response executing the creation function of the smart contract, executing the creation function comprising

- integrating the first bonding curve from the current supply size to the current supply size increased with the amount of crypto tokens of the first type along the corresponding curve segments to determine an amount of crypto tokens of a second type,

- transferring the amount of crypto tokens of the second type to a pool associated with the smart contract, and
- increasing the current supply size with the amount of crypto tokens of the first type, and transferring the amount of crypto tokens of the first type.

2. A computer-implemented method for maintaining crypto tokens of a first type comprising the method for creating crypto tokens of a first type as in Claim 1, the smart contract implementing an annulling function for annulling crypto tokens, and a second bonding curve, the second bonding curve being defined as a sequence of multiple curve segments, a curve segment connecting to a subsequent curve segment, the method further comprising

- receiving an annulling request for annulling an amount of crypto tokens of the first type, and in response executing the annulling function of the smart contract, executing the annulling function comprising

- integrating the second bonding curve from the current supply size to the current supply size decreased with the amount of crypto tokens of the first type along the corresponding curve segments to determine an amount of crypto tokens of a second type,

- transferring the amount of crypto tokens of the second type from the pool associated with the smart contract, and
- decreasing the current supply size with the amount of crypto tokens of the first type, and invalidating the amount of crypto tokens of the first type.

3. A method for maintaining crypto tokens as in claim 1 or 2, wherein a curve segment is defined by one or more parameters.

4. A method for maintaining crypto tokens as in any one of the preceding claims, wherein a curve segment is defined by a polynomial, e.g., a Bezier spline.

5. A method for maintaining crypto tokens as in anyone claims 3 or 4, wherein integrating along a curve segment uses an integral of the curve segment, the integral being defined by the parameters.

6. A method for maintaining crypto tokens as in any one of the preceding claims, wherein a bonding curve is defined by at least three segments, including a first segment, one or more connecting segments, and a second segments, wherein all curve segments have non-negative first derivative everywhere, the first segment has a non-negative second derivative everywhere, and the second curve segment has a non-positive second derivative everywhere.

7. A computer-implemented method for maintaining crypto tokens, wherein

- the first bonding curve is larger or equal to the second bonding curve, or
- the first bonding curve equals the second bonding curve,
- the first and second bonding curve are obtained from a medium bonding curve,
- the first bonding curve is obtained from a second bonding curve or vice versa.

8. A computer-implemented method for maintaining crypto tokens as in Claim 7, the smart contract implementing a first updating function for updating the second bonding curve, comprising fitting multiple curve segments one or more constraints, the constraints comprising the constraint that the integral over the updated second bonding curve up to the current supply size is less or equal to the amount of crypto tokens of the second type in the pool.

9. A computer-implemented method for maintaining crypto tokens as in Claim 8, comprising transferring an additional amount of crypto tokens of the second type to the pool, the integral over the updated second bonding curve being less or equal the new pool amount.

10. A computer-implemented method for maintaining crypto tokens as in any one of the preceding claims, the smart contract implementing a second updating function for updating the second bonding curve, comprising increasing or decreasing the number of multiple curve segments.

11. Server device for maintaining crypto tokens of a first type, the server device comprising

- a communication interface configured to receive a creation request for creating an amount of crypto tokens of the first type, and
- a processor system configured to

- obtaining a smart contract from a distributed ledger, the smart contract implementing a creation function for creating crypto tokens, the smart contract maintaining a current supply size indicating the number of crypto tokens of a first type so-far created, and a first bonding curve, the first bonding curve being defined as a sequence of multiple curve segments, a curve segment connecting to a subsequent curve segment,
- in response to receiving the creation request, executing the creation function of the smart contract, executing the creation function comprising

- integrating the first bonding curve from the current supply size to the current supply size increased with the amount of crypto tokens of the first type along the corresponding curve segments to determine an amount of crypto tokens of a second type,

- transferring the amount of crypto tokens of the second type to a pool associated with the smart contract, and
- increasing the current supply size with the amount of crypto tokens of the first type, and transferring the amount of crypto tokens of the first type.

12. Client device claim for maintaining crypto tokens of a first type, the client device comprising

- a communication interface configured to send a creation request for creating an amount of crypto tokens of the first type, and
- a processor system configured to

- maintain a wallet with crypto tokens of the second type, and to transfer an amount of crypto tokens of the second type to a pool associated with a smart contract,
- maintain a wallet with crypto tokens of the first type, and to receive an amount of crypto tokens of the first type from the smart contract, wherein

- the amount of crypto tokens of the second type is determined by integrating by a smart contract a bonding curve from a current supply size to the current supply size increased with the amount of crypto tokens of the first type along the corresponding curve segments to determine an amount of crypto tokens of a second type, the bonding curve being defined as a sequence of multiple curve segments, a curve segment connecting to a subsequent curve segment.

13. A transitory or non-transitory computer readable medium (1000) comprising data (1020) representing instructions, which when executed by a processor system, cause the processor system to perform the method according to any one of claims 1-10.

Fig. 1a

Fig. 1b

Fig. 1c

210

251    252    253

211    212    ...    213    ...    214    215

241    242

220

221

222

223

231    232    233    234

*Fig. 2*

Fig. 3a

Fig. 3b

Fig. 3c

Fig. 3d

Fig. 3e

Fig. 4

500

| 510 |
| 520 |
| 522 |
| 530 |
| 540 |

Fig. 5

600

| 510 |
| 620 |
| 622 |
| 630 |
| 640 |

Fig. 6

*Fig. 7a*

*Fig. 7b*

Europäisches
Patentamt

European
Patent Office

Office européen
des brevets

# EUROPEAN SEARCH REPORT

Application Number

EP 22 18 8246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Pettit Paula: "Bonding Curves -The What, Why, and Shapes Behind Them", , 1 December 2020 (2020-12-01), XP093006640, Retrieved from the Internet: URL:https://web.archive.org/web/2020120117 3231/https://www.linumlabs.com/articles/bo nding-curves-the-what-why-and-shapes-behin d-it [retrieved on 2022-12-09] * bullet 1 - bullet 5; page 2 * * page 10; figure F * * page 12; figure F * * Figure; page 13 * * Equations; page 12 - page 14 * ----- | 1-13 | INV. G06F21/64 H04L9/00 |
| X | US 2021/027281 A1 (KILROE JAMES ALEXANDER GIBSON [ZA] ET AL) 28 January 2021 (2021-01-28) * paragraph [0016] * * paragraph [0032] * * paragraph [0168] * * paragraph [0177] - paragraph [0178] * * paragraph [0205] - paragraph [0207] * * paragraph [0211] * ----- | 1-13 | TECHNICAL FIELDS SEARCHED (IPC) G06F H04L |
| A | US 2020/279321 A1 (WANG DONG [HK]) 3 September 2020 (2020-09-03) * paragraph [0061] - paragraph [0143] * ----- | 1-13 | |

The present search report has been drawn up for all claims

| Place of search | Date of completion of the search | Examiner |
|---|---|---|
| Munich | 9 December 2022 | Dobre, Dan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                    

& : member of the same patent family, corresponding document

EPO FORM 1503 03.82 (P04C01)

2

## ANNEX TO THE EUROPEAN SEARCH REPORT
## ON EUROPEAN PATENT APPLICATION NO.

EP 22 18 8246

09-12-2022

| Patent document cited in search report | Publication date | Patent family member(s) | Publication date |
|---|---|---|---|
| US 2021027281 A1 | 28-01-2021 | US 2021027281 A1<br>WO 2019043668 A1 | 28-01-2021<br>07-03-2019 |
| US 2020279321 A1 | 03-09-2020 | NONE | |

EPO FORM P0459

**EP 4 134 857 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019043668 A1

**Non-patent literature cited in the description**

- **G. WOOD.** *Ethereum: a secure decentralised generalised transaction ledger,* 11 July 2021